# EUROPÄISCHE PATENTSCHRIFT

(11) **EP 2 448 848 B1**
(45) Veröffentlichungstag und Bekanntmachung des Hinweises auf die Patenterteilung: **20.11.2013**
(21) Anmeldenummer: 10744839.1
(22) Anmeldetag: 22.06.2010
(51) Int. Cl.: B65G 47/96

(54) **SORTIERFÖRDERER MIT DOPPELTRAGSCHALE**
SORTING CONVEYOR WITH A DOUBLE CARRIER TRAY
CONVOYEUR DE TRIAGE MUNI D'UN DOUBLE PLATEAU-SUPPORT

(30) Priorität: 03.07.2009 DE 202009009007 U
(43) Veröffentlichungstag der Anmeldung: 09.05.2012
(73) Patentinhaber: BEUMER GmbH & Co. KG, 59269 Beckum (DE)
(72) Erfinder: HEITPLATZ, Heino, 48317 Drensteinfurt (DE); PÖLLING, Ludger, 59329 Wadersloh-Diestedde (DE)
(74) Vertreter: Philipp, Matthias
(86) Internationale Anmeldenummer: PCT/DE2010/000717
(87) Internationale Veröffentlichungsnummer: WO 2011/000349

(56) Entgegenhaltungen:
- EP-A1- 0 664 262
- EP-A1- 1 454 856
- EP-A2- 0 839 739
- US-A- 3 848 728
- US-B1- 6 460 681

## Beschreibung

Die Erfindung betrifft einen Sortierförderer mit Fahrwagen, die entlang einer Förderbahn verfahrbar geführt sind, wobei jeder Fahrwagen eine Doppeltragschale mit einem ersten Tragschalenteil zur Aufnahme eines ersten Gegenstands und einem zweiten Tragschalenteil zur Aufnahme eines zweiten Gegenstandes trägt.

Es ist ein derartiger Sortierförderer bekannt, bei dem zur Steigerung der Sortierleistung auf einem Fahrwagen zwei Schalen nebeneinander angeordnet sind, die unabhängig voneinander kippbar sind. Hierfür sind zwei unabhängige, einzeln ansteuerbare Abgabebetätigungseinrichtungen erforderlich, beispielsweise in Form von zwei Elektromotoren, was mit einem erheblichen konstruktiven Aufwand einhergeht.

Die Aufgabe der Erfindung besteht darin, bei einem Sortierförderer mit Doppeltragschalen den konstruktiven Aufwand zu reduzieren.

Bei einem gattungsgemäßen Sortierförderer wird diese Aufgabe dadurch gelöst, daß der erste Tragschalenteil von dem zweiten Tragschalenteil abgegrenzt ist, insbesondere durch ein Abtrennmittel und der erste Tragschalenteil zur Ausführung einer Abgabebewegung, durch die der erste Gegenstand abgebbar ist, während, insbesondere durch das Abtrennmittel, eine Abgabe des zweiten Gegenstands verhindert ist, relativ zu dem Fahrwagen bewegbar, insbesondere kippbar gehalten ist, und der zweite Tragschalenteil zum Ausführen einer Abgabebewegung, durch die der zweite Gegenstand abgebbar ist, während, insbesondere durch das Abtrennmittel, eine Abgabe des ersten Gegenstands verhindert ist, relativ zu dem Fahrwagen bewegbar, insbesondere kippbar gehalten ist, wobei jeder Fahrwagen eine einzige gesteuert antreibbare Abgabebetätigungseinrichtung aufweist, die der Doppeltragschale zugeordnet ist und entweder in eine erste oder in eine entgegengesetzte zweite Abgabestellung bringbar ist, wobei die Abgabebetätigungseinrichtung bei Betätigung in die erste Abgabestellung eine Abgabebewegung des ersten Tragschalenteils und bei Betätigung in die zweite Abgabestellung eine Abgabebewegung des zweiten Tragschalenteils bewirkt.

Der erste Tragschalenteil kann bezüglich einer vertikalen Längsmittelebene des Fahrwagens spiegelsymmetrisch zu dem zweiten Tragschalenteil ausgebildet sein.

Die erste Abgabebewegung kann bezüglich einer vertikalen Längsmittelebene des Fahrwagens spiegelsymmetrisch zu der zweiten Abgabebewegung sein.

Es besteht die Möglichkeit, daß der erste Tragschalenteil fest mit dem zweiten Tragschalenteil verbunden ist und beide eine starre Doppeltragschale bilden. Die Doppeltragschale kann hierbei eine vertikale, mittige, insbesondere in Längsrichtung verlaufende Trennwand aufweisen.

Alternativ kann vorgesehen sein, daß der erste Tragschalenteil separat von dem zweiten Tragschalenteil bewegbar, insbesondere kippbar gehalten ist. Hierbei können beide Tragschalenteile eine benachbart zu einer vertikalen Längsmittelebene des Fahrwagens angeordnete und in Längsrichtung verlaufende Begrenzungswand aufweisen.

Die Abgabebetätigungseinrichtung kann mechanisch und/oder elektromotorisch ausgebildet sein, und insbesondere nur einen einzigen Antriebsmotor oder Antriebselement beinhalten. Sie kann mindestens ein mechanisches, elektrisches oder optisches Auslöseelement aufweisen, das mit einer förderbahnfesten Auslösung zusammenwirkt, um ein Tragschalenteil an einer Ausschleusstelle zu einer Abgabebewegung zu veranlassen.

Die Abgabebetätigungseinrichtung kann über ein Betätigungsgetriebe fest mit der Doppeltragschale gekoppelt sein.

Die Abgabebetätigungseinrichtung kann eine Dreh- oder Linearbewegung ausführen, die über das Betätigungsgetriebe in eine Abgabebewegung der Doppelschale umsetzbar ist.

Die Abgabebewegung des ersten und/oder des zweiten Tragschalenteils kann eine ein-, zwei- oder dreiachsige Bewegung sein.

Die Abgabebewegung des ersten und/oder des zweiten Tragschalenteils kann eine Kippbewegung sein, die mindestens eine Drehkomponente umfasst.

Die Abgabebewegung des ersten und/oder des zweiten Tragschalenteils kann mindestens eine Linearkomponente umfassen.

Die Erfindung sieht weiterhin bevorzugt vor, daß die Abgabebetätigungseinrichtung mit dem ersten Tragschalenteil über eine erste Freilaufeinrichtung und mit dem zweiten Tragschalenteil über eine zweite Freilaufeinrichtung verbunden ist, wobei die erste Freilaufeinrichtung ansprechend auf eine Bewegung der Abgabebetätigungseinrichtung in die erste Abgabestellung die Abgabebewegung und bei einer Bewegung in die zweite Abgabestellung keine Abgabebewegung des ersten Tragschalenteils bewirkt, und wobei die zweite Freilaufeinrichtung ansprechend auf eine Bewegung der Abgabebetätigungseinrichtung in die zweite Abgabestellung die Abgabebewegung und auf eine Bewegung in die erste Abgabestellung keine Abgabebewegung des zweiten Tragschalenteils bewirkt.

Hierbei kann vorgesehen sein, daß die erste Freilaufeinrichtung durch ein das erste Tragschalenteil tragendes, um eine erste Kippachse schwenkbares, erstes Stützmittel gebildet ist, das eine mit einem Anschlag versehene erste Steuerkurve aufweist, mit der ein von der Abgabebetätigungseinrichtung betätigbares erstes Steuerelement zusammenwirkt, wobei bei einer Bewegung der Abgabebetätigungseinrichtung in die erste Abgabestellung das erste Steuerelement gegen den Anschlag läuft und das erste Stützmittel zur Abgabebewegung veranlasst.

Insbesondere besteht die Möglichkeit, daß die zweite Freilaufeinrichtung durch ein das zweite Tragschalenteil tragendes, um eine zweite Kippachse schwenkbares, zweites Stützmittel gebildet ist, das eine mit einem Anschlag versehene zweite Steuerkurve aufweist, mit der ein von der Abgabebetätigungseinrichtung betätigbares zweites Steuerelement zusammenwirkt, wobei bei einer Bewegung der Abgabebetätigungseinrichtung in die zweite Abgabestellung das zweite Steuerelement gegen den Anschlag läuft und das zweite Stützmittel zur Abgabebewegung veranlasst.

Hierbei kann vorgesehen sein, daß die erste und zweite Kippachse übereinstimmen, wobei das erste und zweite Steuerelement um eine zu den Kippachsen parallele Schwenkachse schwenkbar ist und die Steuerkurven jeweils bis zu dem Anschlag einen um die Schwenkachse kreisbogenförmig verlaufenden Abschnitt aufweisen.

Hierbei kann weiter vorgesehen sein, daß die Schwenkachse in einem Abstand von den Kippachsen angeordnet ist und die Steuerkurven jeweils anschließend an den kreisbogenförmigen Abschnitt einen Anschlagabschnitt aufweisen, der nicht kreisbogenförmig um die Schwenkachse verläuft.

In Weiterbildung der Erfindung kann vorgesehen sein, daß die Stützmittel und Steuerkurven scheibenförmig ausgebildet sind und die Steuerelemente Kurvenrollen sind, die an benachbart zu den Stützmitteln angeordneten, mit einer Verzahnung versehenen Hebeln gehalten sind, wobei die Abgabebetätigungseinrichtung durch einen Elektromotor gebildet ist, der eine Antriebswelle antreibt, auf der zwei Antriebszahnräder sitzen, von denen jeweils eines mit einer Verzahnung zusammenwirkt.

Bevorzugt ist weiter vorgesehen, daß die Stützmittel in ihrer Förderstellung durch ein Verriegelungsmittel mechanisch verriegelt sind, wobei das Verriegelungsmittel an jedem Stützmittel durch eine um die Schwenkachse kreisbogenförmig verlaufende Verriegelungssteuerkurve gebildet ist, mit der ein um die Schwenkachse verschwenkbares Verriegelungselement zusammenwirkt.

Zweckmäßigerweise ist das Verriegelungselement eine auf dem Hebel angeordnete Kurvenrolle.

Die Erfindung wird nachfolgend anhand eines Ausführungsbeispiels erläutert, wobei auf eine Zeichnung Bezug genommen ist, in der
Figur 1 ein Kippelement als Teil eines Fahrwagens eines erfindungsgemäßen Sortierförderers in einer perspektivischen Ansicht zeigt,
Figur 2 das Kippelement nach Figur 1 in einer Vorderansicht in Richtung II in Figur 1 zeigt,
Figur 3 das Kippelement nach Figur 1 mit einem gesenkten Tragschalenteil zeigt,
Figur 4 eine Vorderansicht des Kippelements in Richtung IV in Figur 3 zeigt,
Figur 5 das Kippelement nach Figur 1 in einer perspektivischen Ansicht mit abgenommenen Tragschalen zeigt,
Figur 6 das Kippelement nach Figur 5 in einer einseitig abgesenkten Stellung zeigt,
Figur 7 das Kippelement nach Figur 1 mit teilweise abgenommenen Stützmitteln in einer einseitig abgesenkten Stellung zeigt,
Figur 8 eine Stellung wie Figur 7 mit abgenommenem vorderen Stützmittel zeigt,
Figur 9 eine Vorderansicht in Richtung IX in Figur 8 zeigt,
Figur 10 eine Ansicht wie Figur 9 mit angedeutetem Stützmittel zeigt,
Figur 11 eine Ansicht wie Figur 10 zeigt, wobei ein mit einer Verzahnung versehener Hebel um 90° in Freilaufrichtung verschwenkt ist,
Figur 12 eine Ansicht ähnlich Figur 10 zeigt, wobei der mit einer Verzahnung versehene Hebel um 90° in entgegen gesetzter Richtung verschwenkt ist und das Stützmittel in Abgabestellung gebracht ist;
Figur 13a, 13b das Funktionsprinzip des Zusammenwirkens von Hebel und Stützmittel erläutern.

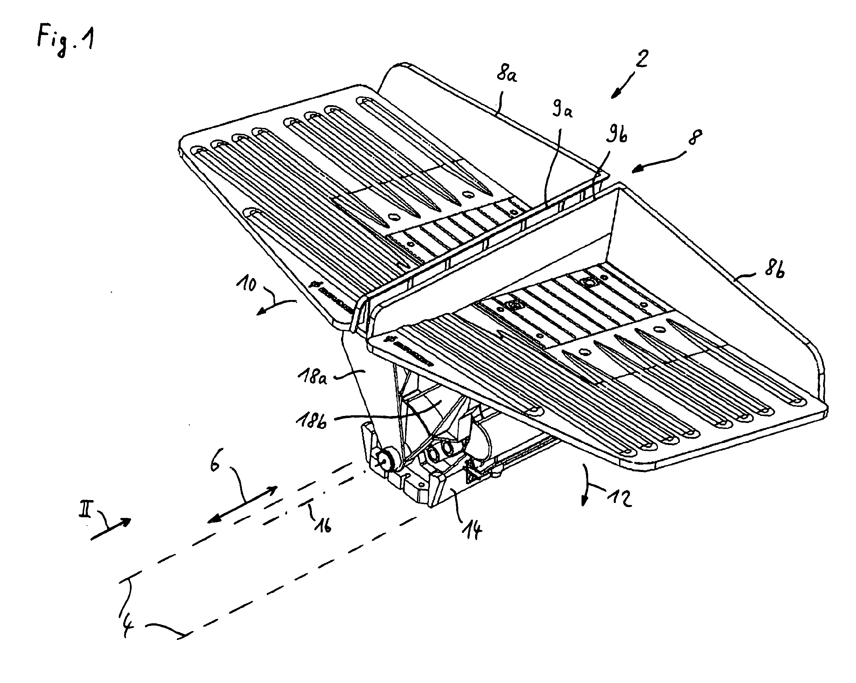

Figur 1 zeigt in einer perspektivischen Ansicht ein Kippelement 2 als Bestandteil eines erfindungsgemäßen Sortierförderers, welches in bekannter Weise auf einem Fahrwagen angeordnet ist, der entlang einer Förderbahn, in Figur 1 mit 4 angedeutet, in einer Längsrichtung 6 befahrbar geführt ist. Ein Sortierförderer weist im Allgemeinen eine größere Anzahl von Fahrwagen auf, die unabhängig voneinander oder in gelenkiger Verbindung miteinander entlang der Förderbahn angetrieben beweglich sind.

Das Kippelement 2 trägt eine Doppeltragschale 8, die in einer Ausführungsform der Erfindung einteilig ausgebildet sein kann und zur Ausführung einer Abgabebewegung, beispielsweise einer Kippbewegung in Richtung der Pfeile 10, 12, an einem mit dem Fahrwagen fest verbundenen, nicht kippbaren Unterteil 14 des Kippelements 2 gelagert ist.

Die Doppeltragschale 8 weist einen ersten Tragschalenteil 8a und einen zweiten Tragschalenteil 8b auf, die durch ein Abtrennmittel in Form einer in Längsrichtung 6 verlaufenden Begrenzungswand 9a, 9b voneinander getrennt sind.

Wenn die Doppeltragschale 8 starr ausgebildet ist, d.h. wenn der erste Tragschalenteil 8a und der zweite Tragschalenteil 8b nicht relativ zueinander beweglich sind, kann durch eine Schwenk- oder Kippbewegung um eine Schwenkachse 16 eine gesteuerte Abgabebewegung eines auf dem ersten Tragschalenteil und/oder auf dem zweiten Tragschalenteil befindlichen Gegenstands in die eine oder andere Richtung erfolgen. Dabei verhindert die Begrenzungswand 9a, b, daß ein auf dem ersten Tragschalenteil 8a befindlicher Gegenstand beim Absenken des zweiten Tragschalenteils abgegeben wird, und umgekehrt. Lediglich eine gleichzeitige Abgabe der beiden Gegenstände ist nicht möglich.

Bei der in Figur 1 und den weiteren Figuren dargestellten Ausführungsform der Erfindung sind die beiden Tragschalenteile 8a, 8b jedoch getrennt voneinander ausgebildet und unabhängig voneinander absenkbar oder um eine Kippachse 16 in Richtung der Pfeile 10, 12 verschwenkbar. Da erfindungsgemäß nur eine einzige gesteuert antreibbare Kippbetätigungseinrichtung in dem Kippelement 2 angeordnet ist, die entweder in eine erste oder in eine entgegengesetzte zweite Abgabestellung bringbar ist, ist keine gleichzeitige Verschwenkung beider Tragschalenteile 8a, b, sondern entweder ein Absenken des ersten oder des zweiten Tragschalenteils möglich, wie nachfolgend im einzelnen erläutert wird.

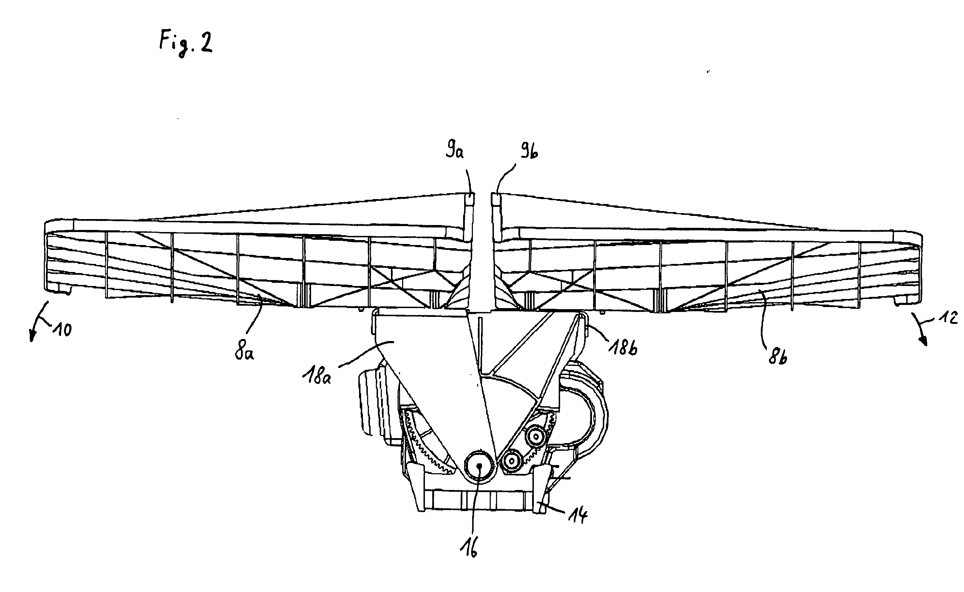

Figur 2 zeigt eine Vorderansicht des Kippelements 2 in Richtung II in Figur 1, wobei zu erkennen ist, daß die Tragschalenteile 8a, 8b jeweils auf einem Stützmittel 18a, b, gehalten sind, welches um die Kippachse 16 schwenkbeweglich an dem Unterteil 14 gelagert ist.

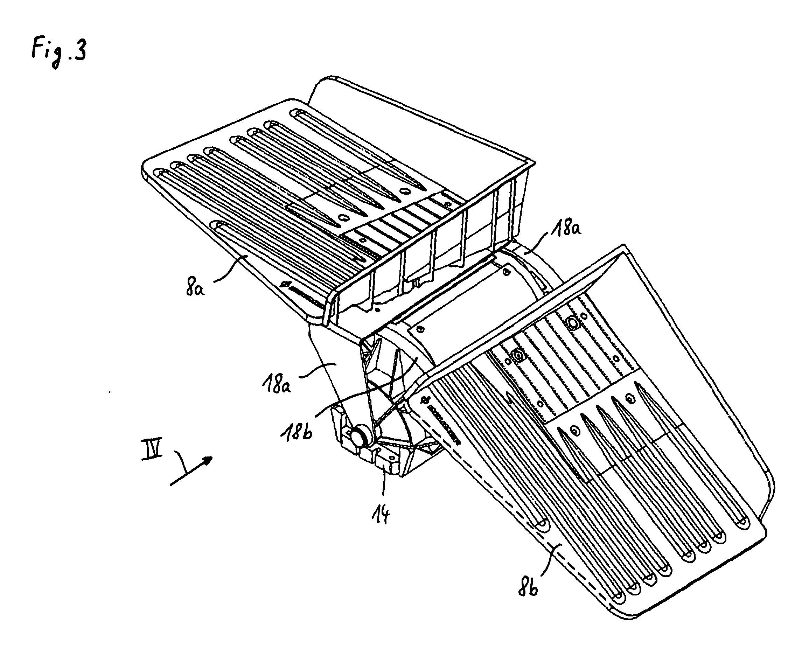

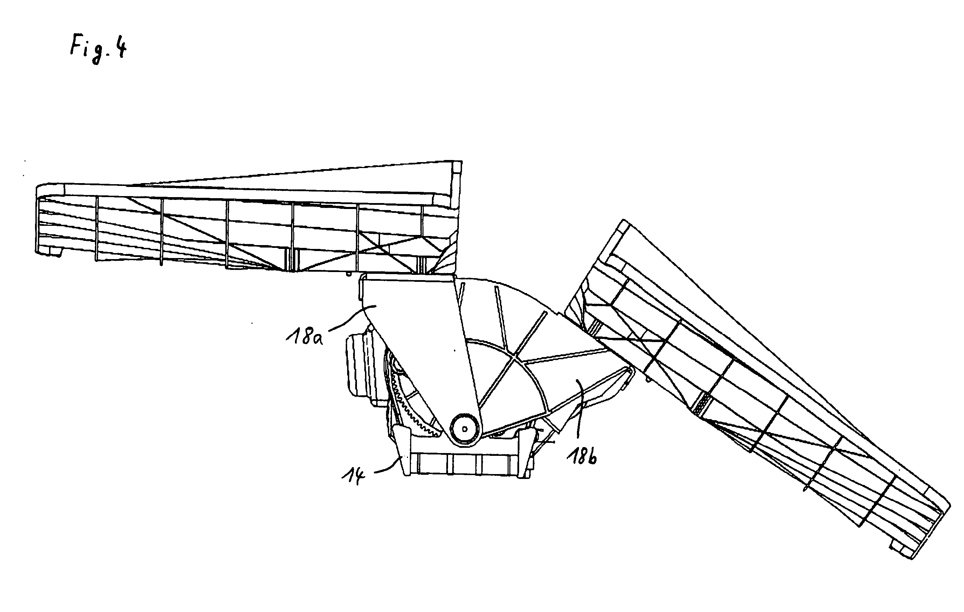

Figur 3 und 4 zeigen entsprechende Ansichten wie Figur 1 und 2, wobei der zweite Tragschalenteil 8b in einer seitlich gekippten bzw. abgesenkten Stellung dargestellt ist.

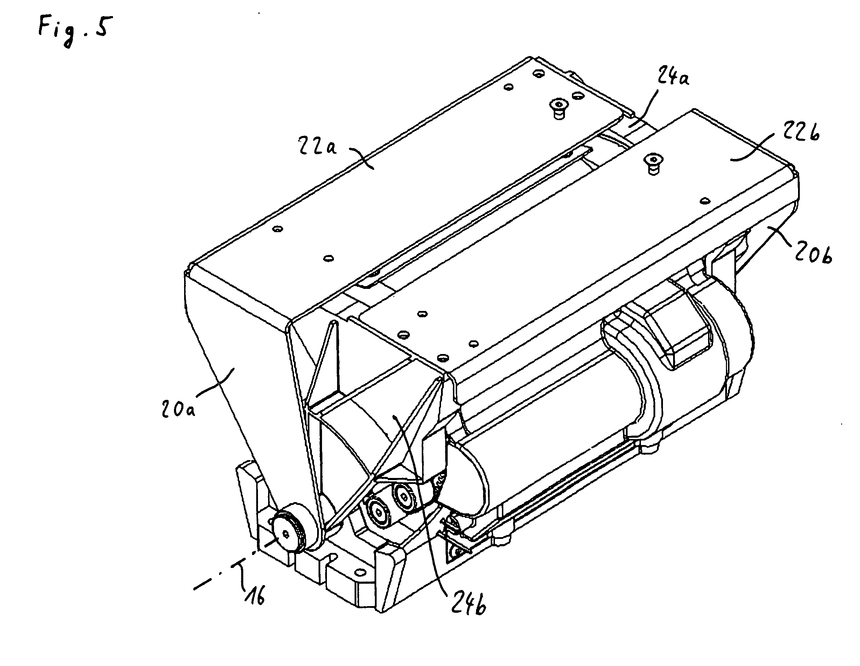

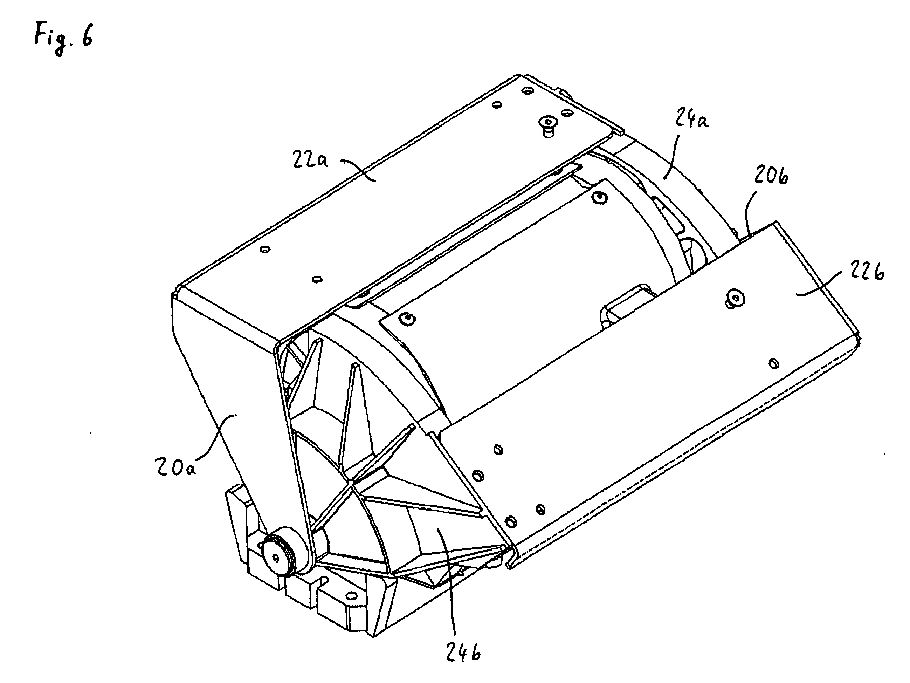

Figur 5 und 6 zeigen entsprechende Ansichten wie Figur 1 und 3, allerdings mit abgenommenen Tragschalenteilen, so daß die Stützmittel 18a, b, deutlich zu erkennen sind. Jedes Stützmittel 18a, b ist im ganzen etwa U-förmig ausgebildet und weist an einem ersten Ende einen flachen Schenkel 20a, b auf, der an einem Ende an der Kippachse 16 schwenkbar angelenkt ist und an seinem gegenüberliegenden Ende in einen parallel zur Kippachse 16 verlaufenden Steg 22a, b übergeht, auf dem das jeweilige Tragschalenteil 8a, b befestigt ist.

Auf der dem Schenkel 20a, b gegenüberliegenden Seite weist jedes Stützmittel 18a, b einen weiteren, gelenkig an der Kippachse 16 gehaltenen Schenkel 24a, b auf, der in noch zu erläuternder Weise mit einer Abgabebetätigungseinrichtung zusammenwirkt und die gesteuerte Kippbewegung um die Kippachse 16 bewirkt. Die Schenkel 24a, b bilden somit die aktiven Elemente der Stützmittel 18a, b, während die Schenkel 20a, b sowie die Stege 22a, b lediglich Abstütz- und Lagerungsfunktion haben.

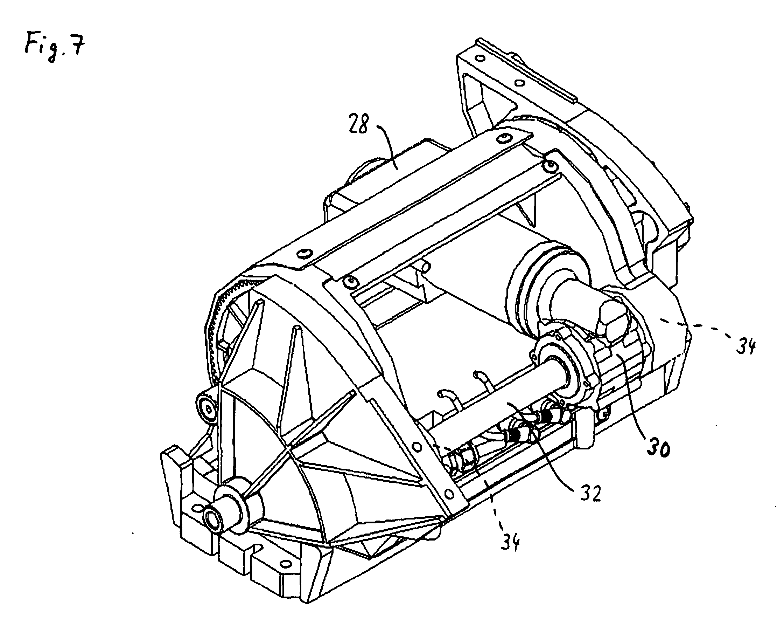

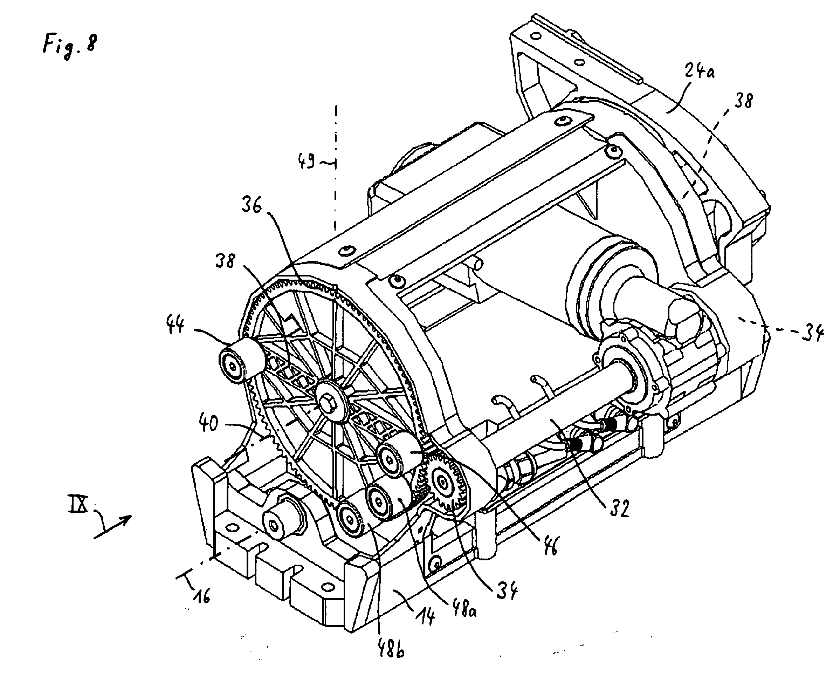

Figur 7 zeigt eine Darstellung ähnlich Figur 6, wobei die Schenkel 20a, b und Stege 22a, b sowie ein Verkleidungsteil des Grundkörpers abgenommen sind. Man erkennt nunmehr einen (einzigen) Antriebsmotor 28, der über ein Schneckengetriebe 30 eine Antriebswelle 32 antreibt, an deren Enden jeweils ein Antriebszahnrad 34 (Figur 8 zeigt eines davon) sitzt.

Wie Figur 8, bei der gegenüber Figur 7 der Schenkel 24b abgenommen ist, weiter zeigt, wirkt hier das Antriebszahnrad 34 mit einer Verzahnung 36 eines Hebels 38 zusammen, der um eine zur Kippachse 16 parallele Schwenkachse 40 drehbar gelagert ist. In dem dargestellten Ausführungsbeispiel ist der Hebel 38 im wesentlichen in Form eines Zahnrades ausgebildet, wobei jedoch in der Praxis die Verzahnung 36 in der Regel nicht über 360° benötigt wird, sondern über einen kleineren Umfangswinkel, wie nachfolgend noch deutlich wird.

Auf dem Hebel 38 ist ein Steuerelement 44 in Form einer Kurvenrolle gehalten, die um eine parallel zu der Schwenkachse 40 verlaufende Drehachse drehbar ist. Diametral gegenüberliegend zu dem Steuerelement 44 ist ein Verriegelungselement 46 angeordnet, das ebenfalls in Form einer um eine zu der Schwenkachse 40 parallele Drehachse drehbaren Rolle ausgebildet ist. Benachbart zu dem Verriegelungselement 46 sind noch zwei weitere Verriegelungselemente 48a, 48b angeordnet, ebenfalls in Form von um zu der Schwenkachse 40 parallele Drehachsen drehbaren Rollen, wobei der Achsabstand sämtlicher Rollen 44, 46 und 48a, b von der Schwenkachse 40 gleich ist, diese also auf einem Kreisbogen um die Schwenkachse 40 angeordnet sind.

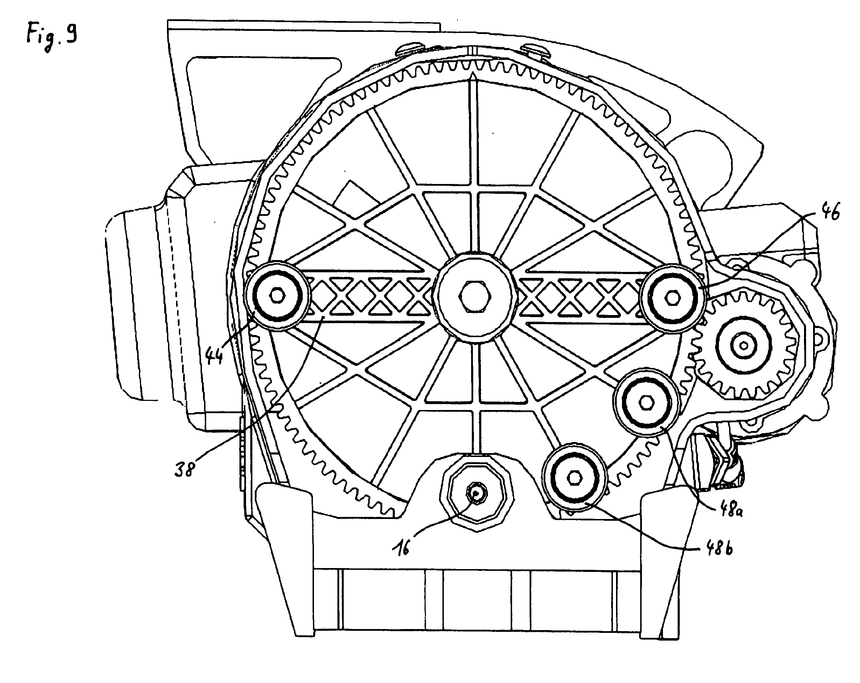

Figur 9 zeigt eine Vorderansicht in Richtung IX in Figur 8, aus der die Anordnung des Steuerelements 44 und der Verriegelungselemente 45, 48a, b deutlich hervorgeht.

Die vier Rollen 44, 46 und 48a, b sind in Bezug auf Figur 9 als ganzes im Uhrzeigersinn oder im Gegenuhrzeigersinn mit dem sie tragenden Hebel 38 um die Schwenkachse 40 verdrehbar, und zwar ausgehend von der in Figur 9 dargestellten Ausgangsposition um jeweils etwa 90°. Die Gesamtanordnung ist dabei so, daß die jeweiligen Hebel 38 mit Rollen 44, 46, 48a, 48b, die an den beiden Enden des Kippelements 2 angeordnet sind, identisch aufgebaut sind, so daß sich die Position der Steuer- und Verriegelungselemente im Bereich des Schenkels 24a des ersten Stützmittels 18a einfach durch Drehung des Hebels 38 um 180° um eine gedachte senkrechte Achse 49 (Figur 8) ergibt. Damit liegen sich stets das Steuerelement 44 eines Hebels 38 und das Verriegelungselement 46 des gegenüberliegenden Hebels 38 auf einer zur Schwenkachse 40 parallelen Achse, die gleichzeitig die Drehachse der Rollen ist, gegenüber und rotieren bei einer Drehung der Antriebswelle 32 nach Art eines Starrkörpers um die Schwenkachse 40.

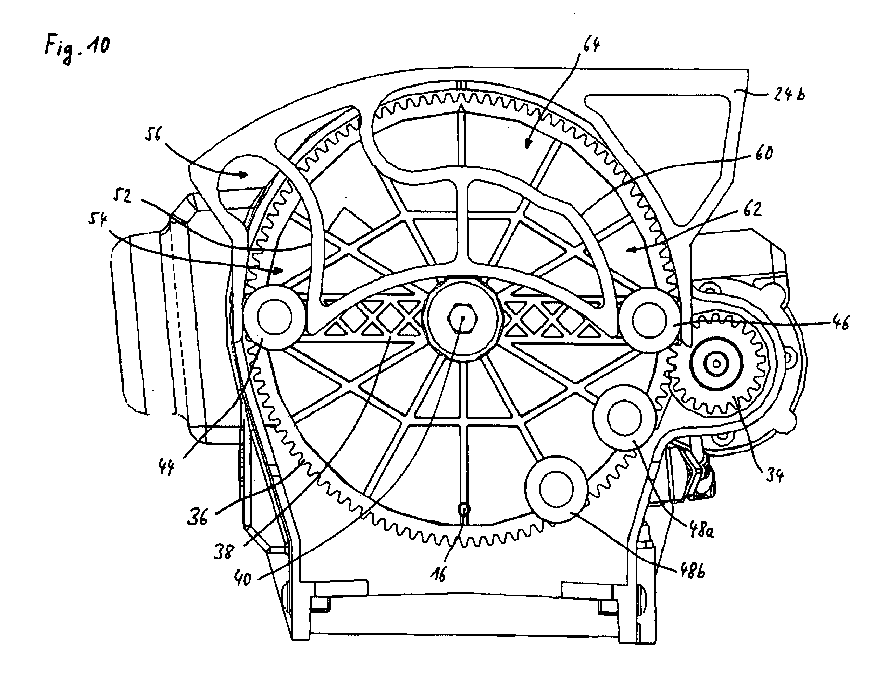

Wie bereits Figur 6 bis 9 ansatzweise erkennen lassen, sind die Schenkel 24a,b der Stützmittel 18a, b innenseitig mit Führungsbahnen oder Steuerkurven für die als Kurvenrollen wirkenden Rollen 44 bis 48 versehen. Figur 10 zeigt die Anordnung der Steuerkurven im Einzelnen, wobei eine erste Steuerkurve 52 zum Zusammenwirken mit dem Steuerelement bzw. der Rolle 44 ausgebildet ist und einen endseitig offenen, ersten, um die Schwenkachse 40 kreisbogenförmig verlaufenden Abschnitt 54 aufweist, in dem sich das Steuerelement 44 in Figur 10 befindet. Die erste Steuerkurve 52 geht anschließend an den kreisbogenförmigen Abschnitt 54 in einen Anschlagabschnitt 56 über, der in der hier dargestellten Ausführungsform einen nach außen weisenden Verlauf aufweist.

Gegenüber der ersten Steuerkurve 52 ist eine zweite Steuerkurve 60 ausgebildet, die ebenso wie die erste Steuerkurve 52 ausgehend von ihrem Anfang, der dem der ersten Steuerkurve um etwa 180° bezüglich der Schwenkachse 40 gegenüberliegt, zunächst einen endseitig offenen, um die Schwenkachse 40 kreisbogenförmig verlaufenden Abschnitt 62 oder eine Verriegelungssteuerkurve aufweist, die sich näherungsweise über einen Umfangswinkel, bezogen auf die Schwenkachse 40 als Mittelpunkt, von 45° erstreckt.

Während sowohl die erste Steuerkurve 52, bestehend aus dem kreisbogenförmigen Abschnitt 54 und dem Anschlagabschnitt 56, als auch der kreisbogenförmige Abschnitt 62 der zweiten Steuerkurve 60 durch einander mit festem gegenseitigen Abstand gegenüberliegende Steuerflächen gebildet ist, deren gegenseitiger Abstand dem Durchmesser der Rollen 44 bis 48 entspricht, oder geringfügig größer ist als dieser, verlaufen die genannten Steuerflächen anschließend an den kreisförmigen Abschnitt 62 in einem Leerlaufabschnitt 64 in einem größeren gegenseitigen Abstand voneinander, so daß innerhalb des Leerlaufabschnitts 64 kein Kontakt zwischen Rollen und Steuerkurve mehr gegeben ist.

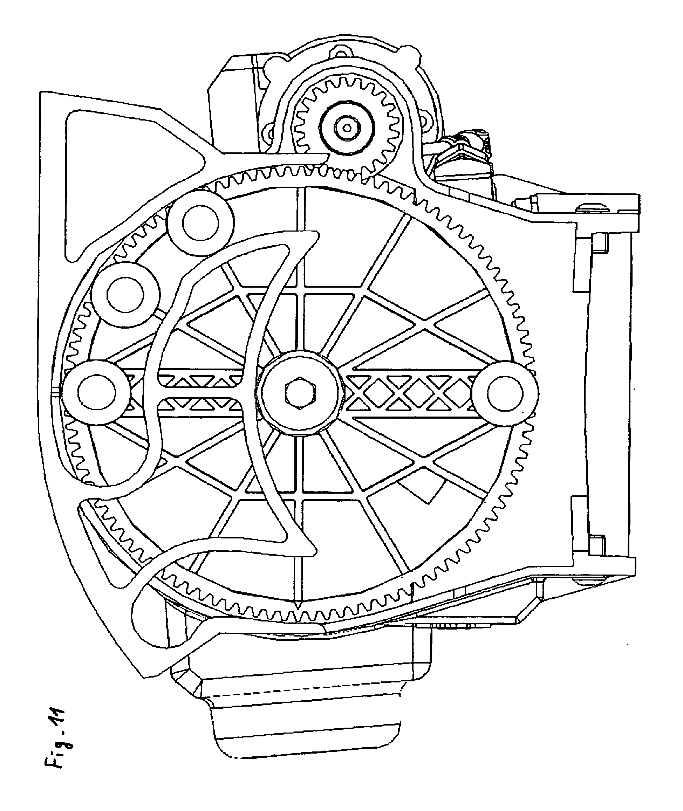

Figur 11 erläutert die Verhältnisse im Bereich von Hebel 38 und Schenkel 24b bei einer Drehung des Hebels 38, ausgehend von der Neutralstellung gemäß Figur 10, um 90° im Gegenuhrzeigersinn. In der Ausgangs- oder Neutralstellung nach Figur 10, in der sich der zweite Tragschalenteil 8b in seiner nicht verschwenkten oder gekippten Förderstellung gemäß Figur 1 befindet, ist das Stützmittel 18b aufgrund der festen Verbindung zwischen den Steuerkurven 52, 62 und dem Schenkel 24b und aufgrund des Zusammenwirkens der Rollen 44, 46 mit den Steuerkurven 52, 62 an einer Kippbewegung um die Kippachse 16 gehindert. Aber auch dann, wenn das Steuerelement 44 aus der ersten Steuerkurve 52 austritt, bleibt das Stützmittel 18b verriegelt, da sich zumindest eine der Rollen 46, 48a, 48b nacheinander in Zusammenwirken mit dem kreisbogenförmigen Abschnitt bzw. der Verriegelungssteuerkurve 62 befindet, wenn sich der Hebel 48 im Gegenuhrzeigersinn um die Schwenkachse 40 dreht. Wenn der Hebel 38 gemäß Figur 11 seine Endposition bei Drehung im Gegenuhrzeigersinn erreicht hat, steht noch die Rolle 48b in Zusammenwirken mit der Verriegelungssteuerkurve 62, so daß das zweite Stützmittel 18b und damit der zweite Tragschalenteil 8b in Förderstellung gehalten bleibt und an einem Kippen gehindert ist.

Gleichzeitig mit der vorstehend beschriebenen Drehbewegung des dem Stützmittel 18b zugeordneten Hebels 38 erfolgt eine gleichsinnige Drehung des dem ersten Stützmittel 18a zugeordneten Hebels 38 auf der anderen Seite des Kippelements 2.

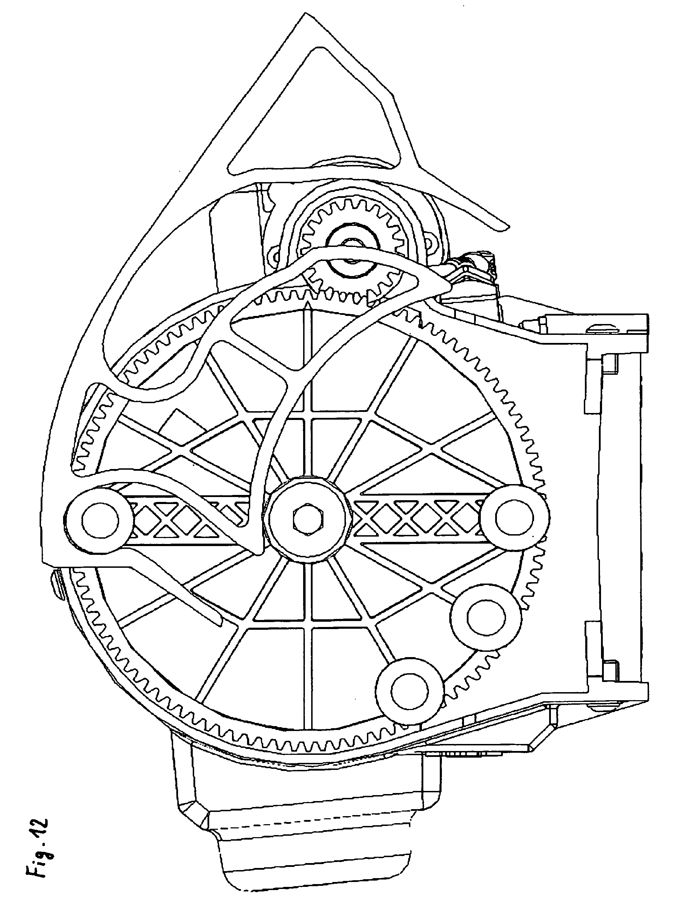

Figur 12 erläutert die Verhältnisse im Bereich des zweiten Stützmittels 18b für eine Drehung des Hebels 18 um 90° im Uhrzeigersinn, wobei aufgrund der identischen Rollenanordnung auf den Hebeln 38 der beiden Stützmittel 18a und 18b die in Figur 11 und 12 erläuterten Bewegungsabläufe jeweils gleichzeitig für die beiden Stützmittel 18a, 18b ablaufen, also entsprechend Figur 11 für das erste Stützmittel 18a und gleichzeitig für das zweite Stützmittel 18b entsprechend Figur 12, oder umgekehrt, so daß entweder der erste Tragschalenteil gekippt wird oder der zweite.

In Figur 12 bewegt sich bei einer Drehung des Hebels 38 im Uhrzeigersinn das Steuerelement 44 entlang der ersten Steuerkurve 52 in Richtung auf den Anschlagabschnitt 56 und beginnt mit Erreichen des Anschlagabschnitts den Schenkel 24b im Uhrzeigersinn mitzunehmen. Da der Schenkel 24b nicht um die Schwenkachse 40, sondern um die tieferliegende Kippachse 16 dreht, verlagert sich der zunächst (Figur 10) radial außenliegende Anschlagabschnitt 56 bezüglich der Schwenkachse 40 radial nach innen und auf das Steuerelement 44 zu, bis dieses, wie Figur 12 zeigt, nach Drehung des Hebels 38 um 90° am Ende des Anschlagabschnitts 56 angelangt ist. Diese Stellung des Hebels 38 stellt die zweite Abgabestellung der Abgabebetätigungseinrichtung dar, die durch den Antriebsmotor 28, das Schneckengetriebe 30, die Antriebswelle 32, die Antriebszahnräder 34, die Verzahnungen 36, die Hebel 38 und die Steuerelemente 44 gebildet ist, wobei der zweite Tragschalenteil gekippt ist, der zweite dagegen nicht.

Bei einer Betätigung der Abgabebetätigungseinrichtung in deren erste Abgabestellung, wodurch der erste Tragschalenteil eine Abgabebewegung ausführt, der zweite Tragschalenteil hingegen nicht, stellen sich damit im Bereich des ersten Stützmittels 18a und insbesondere dessen Schenkel 24a die Verhältnisse nach Figur 12 ein, während sich im Bereich des zweiten Stützmittels 18b und dessen Schenkels 24b die Verhältnisse nach Figur 11 einstellen. Bei einer Bewegung der Abgabebetätigungseinrichtung in deren zweite Abgabestellung ist es genau umgekehrt.

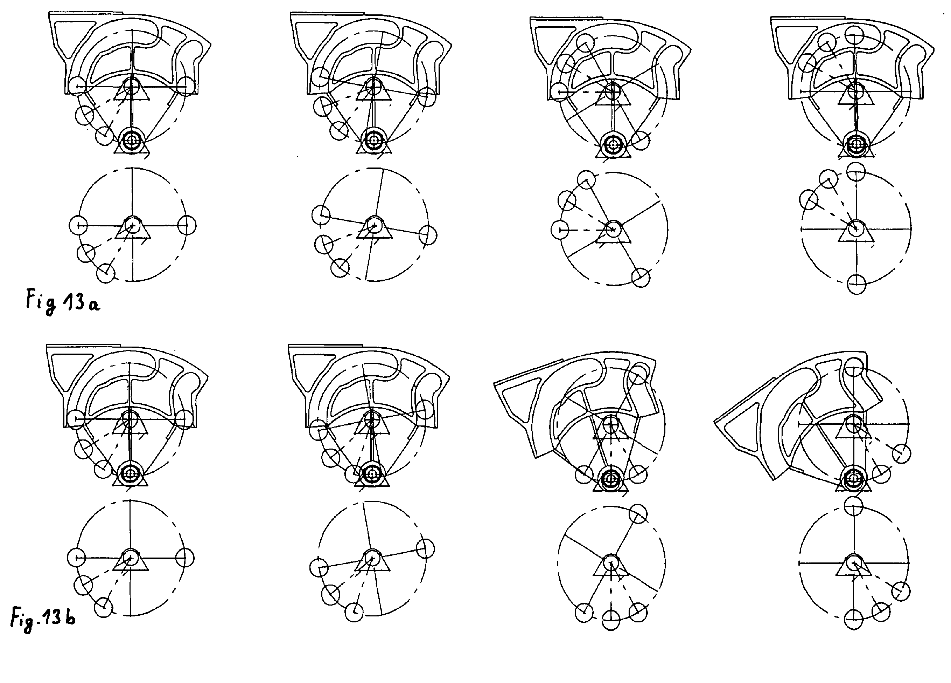

Figur 13a und 13b erläutern die Auswirkung einer Drehung des Hebels 38 um 90° im Uhrzeigersinn (Figur 13a) und im Gegenuhrzeigersinn (Figur 13b) jeweils unter Darstellung von Zwischendarstellungen des Hebels 38. Die beiden in Figur 13a und 13b dargestellten Abläufe erfolgen gleichzeitig, wobei je nach Drehrichtung des Antriebsmotors der eine Tragschalenteil in Förderstellung verbleibt und der andere ausgelenkt wird, oder umgekehrt.

Ein wesentlicher Vorteil bei der dargestellten Ausführungsform besteht darin, daß in Ausgangsstellung der Abgabebetätigungseinrichtung (Figur 13a, b ganz links) beide Tragschalenteile in Förderstellung verriegelt sind, und daß die Verriegelungswirkung für den jeweils nicht betätigten Tragschalenteil (Figur 13a) während der gesamten Schwenkbewegung des Hebels 38 erhalten bleibt.

Alternativ zu der in den Zeichnungen erläuterten Ausführungsform besteht wie eingangs erwähnt die Möglichkeit, daß die beiden Tragschalenteile 8a, b starr miteinander verbunden sind und von einem einteiligen Stützmittel in eine erste oder zweite Abgabeposition bewegt werden, beispielsweise um eine Kippachse entsprechend der Kippachse 16 verschwenkt werden.

Eine alternative Ausführungsform der Erfindung zeichnet sich dadurch aus, daß jeder Tragschalenteil mit einem von der Abgabebetätigungseinrichtung selektiv antreibbaren Fördergurt versehen ist, wobei die Abgabebewegung des ersten Tragschalenteils eine Förderbewegung eines ersten Fördergurts und die Abgabebewegung des zweiten Tragschalenteils eine Förderbewegung eines zweiten Fördergurts ist. Diese Bauart ähnelt den bekannten "cross-belt-Sortern", bei denen auf jedem Fahrwagen ein in Querrichtung orientierter Fördergurt vorgesehen ist, der wahlweise nach links oder rechts antreibbar ist. Erfindungsgemäß ist hingegen jeder Fördergurt nur in einer Abgaberichtung antreibbar, so daß beispielsweise ein auf dem ersten (linken) Tragschalenteil und dem ersten Fördergurt angeordneter Gegenstand ausschließlich nach links abgegeben werden kann, und ein auf dem zweiten (rechten) Tragschalenteil und auf dem zweiten Fördergurt befindlicher Gegenstand ausschließlich nach rechts.

Hierbei ist insbesondere vorgesehen, daß die Abgabebetätigungseinrichtung einen einzigen Antriebsmotor aufweist, der gesteuert entweder mit dem ersten oder mit dem zweiten Fördergurt in Antriebsverbindung bringbar ist. Das Kippen der Tragschalenteile wird daher durch eine Förderbewegung eines Fördergurts ersetzt, so daß eine Kippbewegung nicht mehr erforderlich ist.

## Patentansprüche

1. Sortierförderer mit Fahrwagen, die entlang einer Förderbahn (4) verfahrbar geführt sind, wobei jeder Fahrwagen eine Doppeltragschale (8) mit einem ersten Tragschalenteil (8a) zur Aufnahme eines ersten Gegenstands und einem zweiten Tragschalenteil (8b) zur Aufnahme eines zweiten Gegenstands trägt, **dadurch gekennzeichnet, daß** der erste Tragschalenteil (8a) von dem zweiten Tragschalenteil (8b) abgegrenzt ist, insbesondere durch ein Abtrennmittel (9a, b), und der erste Tragschalenteil (8a) zur Ausführung einer Abgabebewegung, durch die der erste Gegenstand abgebbar ist, während insbesondere durch das Abtrennmittel (9a, b), eine Abgabe des zweiten Gegenstands verhindert ist, relativ zu dem Fahrwagen bewegbar, insbesondere kippbar gehalten ist, und der zweite Tragschalenteil (8b) zum Ausführen einer Abgabebewegung, durch die der zweite Gegenstand abgebbar ist, während, insbesondere durch das Abtrennmittel (9a, b), eine Abgabe des ersten Gegenstands verhindert ist, relativ zu dem Fahrwagen bewegbar, insbesondere kippbar gehalten ist, wobei jeder Fahrwagen eine einzige gesteuert antreibbare Abgabebetätigungseinrichtung (28, 30, 32, 34, 36, 38, 44, 52) aufweist, die der Doppeltragschale (8) zugeordnet ist und entweder in eine erste oder in eine entgegengesetzte zweite Abgabestellung bringbar ist, wobei die Abgabebetätigungseinrichtung (28) bei Betätigung in die erste Abgabestellung eine Abgabebewegung des ersten Tragschalenteils (8a) und bei Betätigung in die zweite Abgabestellung eine Abgabebewegung des zweiten Tragschalenteils (8b) bewirkt.

2. Sortierförderer nach Anspruch 1, **dadurch gekennzeichnet, daß** der erste Tragschalenteil (8a) fest mit dem zweiten Tragschalenteil (8b) verbunden ist und beide eine starre Doppeltragschale (8) bilden.

3. Sortierförderer nach Anspruch 1, **dadurch gekennzeichnet, daß** der erste Tragschalenteil (8a) separat von dem zweiten Tragschalenteil (8b) bewegbar, insbesondere kippbar gehalten ist.

4. Sortierförderer nach Anspruch 2, **dadurch gekennzeichnet, daß** die Abgabebetätigungseinrichtung (28) eine Dreh- oder Linearbewegung ausführt, die über ein Betätigungsgetriebe in eine Abgabebewegung der Doppeltragschale (8) umsetzbar ist.

5. Sortierförderer nach einem der vorangehenden Ansprüche, **dadurch gekennzeichnet, daß** die Abgabebewegung des ersten und/oder des zweiten Tragschalenteils (8a, b) eine ein-, zwei- oder dreiachsige Bewegung ist.

6. Sortierförderer nach Anspruch 3, 4 oder 5, **dadurch gekennzeichnet, daß** die Abgabebetätigungseinrichtung (28) mit dem ersten Tragschalenteil (8a) über eine erste Freilaufeinrichtung (44, 52) und mit dem zweiten Tragschalenteil (8b) über eine zweite Freilaufeinrichtung (44, 52) verbunden ist, wobei die erste Freilaufeinrichtung ansprechend auf eine Bewegung der Abgabebetätigungseinrichtung (28) in die erste Abgabestellung die Abgabebewegung und bei einer Bewegung in die zweite Abgabestellung keine Abgabebewegung des ersten Tragschalenteils (8a) bewirkt, und wobei die zweite Freilaufeinrichtung ansprechend auf eine Bewegung der Abgabebetätigungseinrichtung (28) in die zweite Abgabestellung die Abgabebewegung und auf eine Bewegung in die erste Abgabestellung keine Abgabebewegung des zweiten Tragschalenteils (8b) bewirkt.

7. Sortierförderer nach Anspruch 6, **dadurch gekennzeichnet, daß** die erste Freilaufeinrichtung (44, 52) durch ein das erste Tragschalenteil (8a) tragendes, um eine erste Kippachse (16) schwenkbares, erstes Stützmittel (18a) gebildet ist, das eine mit einem Anschlag (56) versehene erste Steuerkurve (52) aufweist, mit der ein von der Abgabebetätigungseinrichtung (28) betätigbares erstes Steuerelement (44) zusammenwirkt, wobei bei einer Bewegung der Abgabebetätigungseinrichtung in die erste Abgabestellung das erste Steuerelement (44) gegen den Anschlag (56) läuft und das erste Stützmittel (18a) zur Abgabebewegung veranlasst.

8. Sortierförderer nach Anspruch 6 oder 7, **dadurch gekennzeichnet, daß** die zweite Freilaufeinrichtung (44, 52) durch ein das zweite Tragschalenteil (8b) tragendes, um eine zweite Kippachse (16) schwenkbares, zweites Stützmittel (18b) gebildet ist, das eine mit einem Anschlag (56) versehene zweite Steuerkurve (52) aufweist, mit der ein von der Abgabebetätigungseinrichtung (28) betätigbares zweites Steuerelement (44) zusammenwirkt, wobei bei einer Bewegung der Abgabebetätigungseinrichtung (28) in die zweite Abgabestellung das zweite Steuerelement (44) gegen den Anschlag (56) läuft und das zweite Stützmittel (18b) zur Abgabebewegung veranlasst.

9. Sortierförderer nach Anspruch 7 und 8, **dadurch gekennzeichnet, daß** die erste und zweite Kippachse (16) übereinstimmen, wobei das erste und zweite Steuerelement (44) um eine zu den Kippachsen (16) parallele Schwenkachse (40) schwenkbar ist und die Steuerkurven (52) jeweils bis zu dem Anschlag (56) einen um die Schwenkachse (40) kreisbogenförmig verlaufenden Abschnitt (54) aufweisen.

10. Sortierförderer nach Anspruch 9, **dadurch gekennzeichnet, daß** die Schwenkachse (40) in einem Abstand von den Kippachsen (16) angeordnet ist und die Steuerkurven (52) jeweils anschließend an den kreisbogenförmigen Abschnitt (54) einen Anschlagabschnitt (56) aufweisen, der nicht kreisbogenförmig um die Schwenkachse (40) verläuft.

11. Sortierförderer nach einem der Ansprüche 7 bis 10, **dadurch gekennzeichnet, daß** die Stützmittel (18a, b) und Steuerkurven (52) scheibenförmig ausgebildet sind und die Steuerelemente (44) Kurvenrollen sind, die an benachbart zu den Stützmitteln (18a, b) angeordneten, mit einer Verzahnung (36) versehenen Hebeln (38) gehalten sind, wobei die Abgabebetätigungseinrichtung durch einen Antriebsmotor (28) gebildet ist, der eine Antriebswelle (30) antreibt, auf der zwei Antriebszahnräder (34) sitzen, von denen jeweils eines mit einer Verzahnung (36) zusammenwirkt.

12. Sortierförderer nach einem der Ansprüche 7 bis 11, **dadurch gekennzeichnet, daß** die Stützmittel (18a, b) in ihrer Förderstellung durch ein Verriegelungsmittel (46, 62) mechanisch verriegelt sind, wobei das Verriegelungsmittel an jedem Stützmittel durch eine um die Schwenkachse (40) kreisbogenförmig verlaufende Verriegelungssteuerkurve (62) gebildet ist, mit der ein um die Schwenkachse (40) verschwenkbares Verriegelungselement (46) zusammenwirkt.

13. Sortierförderer nach Anspruch 1, **dadurch gekennzeichnet, daß** jeder Tragschalenteil (8a, b) mit einem von der Abgabebetätigungseinrichtung (28) selektiv antreibbaren Fördergurt versehen ist, wobei die Abgabebewegung des ersten Tragschalenteils (8a) eine Förderbewegung eines ersten Fördergurts und die Abgabebewegung des zweiten Tragschalenteils (86) eine Förderbewegung eines zweiten Fördergurts ist.

14. Sortierförderer nach Anspruch 13, **dadurch gekennzeichnet daß** die Fördergurte quer zu einer Fahrtrichtung des Fahrwagens angeordnet sind.

15. Sortierförderer nach Anspruch 13 oder 14, **dadurch gekennzeichnet, daß** die Abgabebetätigungseinrichtung (28) einen Antriebsmotor aufweist, der gesteuert entweder mit dem ersten oder mit dem zweiten Fördergurt in Antriebsverbindung bringbar ist.

## Claims

1. Sorting conveyor comprising carriages, which can be movably controlled along a conveyor track (4), wherein each carriage supports a dual carrying tray (8) comprising a first carrying tray part (8a) for receiving a first object and a second carrying tray part (8b) for receiving a second object, **characterized in that** the first carrying tray part (8a) is separated from the second carrying tray part (8b), particularly by a dividing means (9a, b), and the first carrying tray part (8a) is mounted in a movable fashion, particularly in a tiltable fashion, relative to the carriage, in order to perform a distributing motion, by which the first object can be distributed, while the second object is prevented from being distributed, particularly by the dividing means (9a, b), and the second carrying tray part (8b) is mounted in a movable fashion, particularly in a tiltable fashion, relative to the carriage, in order to perform a distributing motion, by which the second object can be distributed, while the first object is prevented from being distributed, particularly by the dividing means (9a, b), wherein each carriage has a single distribution actuating device (28, 30, 32, 34, 36, 38, 44, 52), which can be driven in a controlled manner and which is associated with the dual carrying tray (8) and can be brought into either a first or a second, opposite distributing position, wherein the distribution actuating device (28) brings about a distributing motion of the first carrying tray part (8a) when actuated into the first distributing position and when actuated into the second distributing position a distributing motion of the second carrying tray part (8b).

2. Sorting conveyor according to claim 1, **characterized in that** the first carrying tray part (8a) is firmly connected to the second carrying tray part (8b) and both form a rigid dual carrying tray (8).

3. Sorting conveyor according to claim 1, **characterized in that** the first carrying tray part (8a) is mounted in a movable fashion, particularly in a tiltable fashion separate from the second carrying tray part (8b).

4. Sorting conveyor according to claim 2, **characterized in that** the distribution actuating device (28) performs a rotating or linear motion, which can be converted by means of a control gear into a distributing motion of the dual carrying tray (8).

5. Sorting conveyor according to any one of the preceding claims, **characterized in that** the distributing motion of the first and/or the second carrying tray part (8a, b) is a one, two or three axis motion.

6. Sorting conveyor according to claims 3, 4 or 5, **characterized in that** the distribution actuating device (28) is connected to the first carrying tray part (8a) by a first idling device (44, 52) and to the second carrying tray part (8b) by a second idling device (44, 52), wherein the first idling device responding to a motion of the distribution actuating device (28) into the first distributing position brings about the distributing motion and with a motion into the second distributing position does not bring about a distributing motion of the first carrying tray part (8a), and wherein the second idling device responding to a motion of the distribution actuating device (28) into the second distributing position brings about the distributing motion and to a motion into the first distributing position does not bring about a distributing motion of the second carrying tray part (8b).

7. Sorting conveyor according to claim 6, **characterized in that** the first idling device (44, 52) is formed by a first support means (18a), supporting the first carrying tray part (8a) and being able to pivot around a first tilting axis (16), which has a first control cam (52) provided with a stop (56), with which a first control element (44), operable by the distribution actuating device (28), cooperates, wherein with a motion of the distribution actuating device into the first distributing position the first control element (44) runs against the stop (56) and brings about the distributing motion of the first support means (18a).

8. Sorting conveyor according to claim 6 or 7, **characterized in that** the second idling device (44, 52) is formed by a second support means (18b), supporting the second carrying tray part (8b) and being able to pivot around a second tilting axis (16), which has a second control cam (52) provided with a stop (56), with which a second control element (44), operable by the distribution actuating device (28), cooperates, wherein with a motion of the distribution actuating device (28) into the second distributing position the second control element (44) runs against the stop (56) and brings about the distributing motion of the second support means (18b).

9. Sorting conveyor according to claim 7 and 8, **characterized in that** the first and second tilting axis (16) correspond, wherein the first and second control element (44) can pivot around a pivot axis (40) parallel with the tilting axes (16) and the control cams (52), in each case as far as the stop (56), have a section (54) running around the pivot axis (40) in the form of a circular arc.

10. Sorting conveyor according to claim 9, **characterized in that** the swivel axis (40) is arranged at a distance from the tilting axes (16) and the control cams (52), in each case adjoining the section (54) in the form of a circular arc, have a stop section (56), which does not run in the form of a circular arc around the pivot axis (40).

11. Sorting conveyor according to any one of claims 7 to 10, **characterized in that** the support means (18a, b) and control cams (52) are designed in the form of a disk and the control elements (44) are cam rollers, which are mounted on levers (38) arranged adjacent to the support means (18a, b) and provided with teeth (36), wherein the distribution actuating device is formed by a drive motor (28), which drives a driving shaft (30), on which two driving toothed wheels (34) sit, one of which cooperates with the teeth (36) in each case.

12. Sorting conveyor according to any one of claims 7 to 11, **characterized in that** the support means (18a, b) is mechanically locked in its conveying position by a locking means (46, 62), wherein the locking means at each support means is formed by a locking control cam (62) running in the form of a circular arc around the swivel axis (40), with which a locking element (46), swivel-mounted around the pivot axis (40), cooperates.

13. Sorting conveyor according to claim 1, characterized that each carrying tray part (8a, b) is provided with a conveyor belt which can be selectively driven by the distribution actuating device (28), wherein the distributing motion of the first carrying tray part (8a) is a conveying motion of a first conveyor belt and the distributing motion of the second carrying tray part (86) is a conveying motion of a second conveyor belt.

14. Sorting conveyor according to claim 13, characterized that the conveyor belts are arranged transversely to a travel direction of the carriage.

15. Sorting conveyor according to claim 13 or 14, **characterized in that** the distribution actuating device (28) has a drive motor, which can be controllably brought into driving engagement either with the first or with the second conveyor belt.

## Revendications

1. Transporteur trieur comportant des chariots, qui peuvent être commandés à des fins de déplacement le long d'une voie de transport (4), dans lequel chaque chariot supporte un double plateau de support (8) comportant une première partie de plateau de support (8a) permettant de recevoir un premier objet et une seconde partie de plateau de support (8b) permettant de recevoir un second objet, **caractérisé en ce que** la première partie de plateau de support (8a) est séparée de la seconde partie de plateau de support (8b), en particulier par un moyen de séparation (9a, b), et la première partie de plateau de support (8a) est montée d'une manière mobile, en particulier d'une manière basculable, par rapport au chariot, afin d'effectuer un mouvement de distribution, par lequel le premier objet peut être distribué, alors que le second objet est mis dans l'impossibilité d'être distribué, en particulier par le moyen de séparation (9a, b), et la seconde partie de plateau de support (8b) est montée d'une manière mobile, en particulier d'une manière basculable, par rapport au chariot, afin d'effectuer un mouvement de distribution, par lequel le second objet peut être distribué, alors que le premier objet est mis dans l'impossibilité d'être distribué, en particulier par le moyen de séparation (9a, b), dans lequel chaque chariot a un unique dispositif d'actionnement de distribution (28, 30, 32, 34, 36, 38, 44, 52), qui peut être entraîné d'une manière contrôlée et qui est associé au double plateau de support (8) et peut être mis dans l'une ou l'autre d'une première ou d'une seconde positions de distribution opposées, dans lequel le dispositif d'actionnement de distribution (28) donne lieu à un mouvement de distribution de la première partie de plateau de support (8a) quand il est actionné dans la première position de distribution et quand il est actionné dans la seconde position de distribution un mouvement de distribution de la seconde partie de plateau de support (8b).

2. Transporteur trieur selon la revendication 1, **caractérisé en ce que** la première partie de plateau de support (8a) est fermement raccordée à la seconde partie de plateau de support (8b) et elles forment toutes les deux un double plateau de support rigide (8).

3. Transporteur trieur selon la revendication 1, **caractérisé en ce que** la première partie de plateau de support (8a) est montée d'une manière mobile, en particulier d'une manière basculable séparément par rapport à la seconde partie de plateau de support (8b).

4. Transporteur trieur selon la revendication 2, **caractérisé en ce que** le dispositif d'actionnement de distribution (28) effectue un mouvement rotatif ou linéaire, qui peut être converti par le biais d'un mécanisme de commande en un mouvement de distribution du double plateau de support (8).

5. Transporteur trieur selon l'une quelconque des revendications précédentes, **caractérisé en ce que** le mouvement de distribution de la première et/ou de la seconde parties de plateau de support (8a, b) est un mouvement à un, deux ou trois axes.

6. Transporteur trieur selon les revendications 3, 4 ou 5, **caractérisé en ce que** le dispositif d'actionnement de distribution (28) est raccordé à la première partie de plateau de support (8a) par un premier dispositif de marche au ralenti (44, 52) et à la seconde partie de plateau de support (8b) par un second dispositif de marche au ralenti (44, 52), dans lequel le premier dispositif de marche au ralenti réagissant à un mouvement du dispositif d'actionnement de distribution (28) dans la première position de distribution donne lieu au mouvement de distribution et avec un mouvement dans la seconde position de distribution ne donne pas lieu à un mouvement de distribution de la première partie de plateau de support (8a), et dans lequel le second dispositif de marche au ralenti réagissant à un mouvement du dispositif d'actionnement de distribution (28) dans la seconde position de distribution donne lieu au mouvement de distribution et avec un mouvement dans la première position de distribution ne donne pas lieu à un mouvement de distribution de la seconde partie de plateau de support (8b).

7. Transporteur trieur selon la revendication 6, **caractérisé en ce que** le premier dispositif de marche au ralenti (44, 52) est formé par un premier moyen de support (18a), supportant la première partie de plateau de support (8a) et étant en mesure de pivoter autour d'un premier axe de basculement (16), qui a une première came de commande (52) comportant une butée (56), avec laquelle un premier élément de commande (44),en mesure d'être actionné par le dispositif d'actionnement de distribution (28), coopère, dans lequel avec un mouvement du dispositif d'actionnement de distribution dans la première position de distribution le premier élément de commande (44) va se mettre en appui contre la butée (56) et donne lieu au mouvement de distribution du premier moyen de support (18a).

8. Transporteur trieur selon la revendication 6 ou la revendication 7, **caractérisé en ce que** le second dispositif de marche au ralenti (44, 52) est formé par un second moyen de support (18b), supportant la seconde partie de plateau de support (8b) et étant en mesure de pivoter autour d'un second axe de basculement (16), qui a une seconde came de commande (52) comportant une butée (56), avec laquelle un second élément de commande (44), en mesure d'être actionné par le dispositif d'actionnement de distribution (28), coopère, dans lequel avec un mouvement du dispositif d'actionnement de distribution (28) dans la seconde position de distribution le second élément de commande (44) va se mettre en appui contre la butée (56) et donne lieu au mouvement de distribution du second moyen de support (18b).

9. Transporteur trieur selon la revendication 7 et la revendication 8, **caractérisé en ce que** les premier et second axes de basculement (16) correspondent, dans lequel les premier et second éléments de commande (44) peuvent pivoter autour d'un axe de pivotement (40) se trouvant de manière parallèle par rapport aux axes de basculement (16) et les cames de commande (52), dans chaque cas jusqu'à la butée (56), ont une section (54) s'acheminant autour de l'axe de pivotement (40) sous la forme d'un arc de cercle.

10. Transporteur trieur selon la revendication 9, **caractérisé en ce que** l'axe d'oscillation (40) est arrangé à une distance des axes de basculement (16) et les cames de commande (52), dans chaque cas de manière contigüe par rapport à la section (54) sous la forme d'un arc de cercle, ont une section de butée (56), qui ne s'achemine pas sous la forme d'un arc de cercle autour de l'axe de pivotement (40).

11. Transporteur trieur selon l'une quelconque des revendications 7 à 10, **caractérisé en ce que** le moyen de support (18a, b) et les cames de commande (52) sont conçus sous la forme d'un disque et les éléments de commande (44) sont des galets de came, qui sont montés sur des leviers (38) arrangés de manière adjacente par rapport au moyen de support (18a, b) et comportant des dents (36), dans lequel le dispositif d'actionnement de distribution est formé par un moteur d'entraînement (28), qui entraîne un arbre d'entraînement (30), sur lequel deux roues à dents d'entraînement (34) reposent, l'une d'entre elles coopérant avec les dents (36) dans chaque cas.

12. Transporteur trieur selon l'une quelconque des revendications 7 à 11, **caractérisé en ce que** le moyen de support (18a, b) est verrouillé mécaniquement dans sa position de transport par un moyen de verrouillage (46, 62), dans lequel le moyen de verrouillage au niveau de chaque moyen de support est formé par une came de commande de verrouillage (62) s'acheminant sous la forme d'un arc de cercle autour de l'axe d'oscillation (40), avec laquelle un élément de verrouillage (46), monté de manière oscillante autour de l'axe de pivotement (40), coopère.

13. Transporteur trieur selon la revendication 1, **caractérisé en ce que** chaque partie de plateau de support (8a, b) comporte une courroie de transport qui peut être entraînée de manière sélective par le dispositif d'actionnement de distribution (28), dans lequel le mouvement de distribution de la première partie de plateau de support (8a) est un mouvement de transport d'une première courroie de transport et le mouvement de distribution de la seconde partie de plateau de support (86) est un mouvement de transport d'une seconde courroie de transport.

14. Transporteur trieur selon la revendication 13, **caractérisé en ce que** les courroies de transport sont arrangées de manière transversale par rapport à une direction d'avance du chariot.

15. Transporteur trieur selon la revendication 13 ou la revendication 14, **caractérisé en ce que** le dispositif d'actionnement de distribution (28) a un moteur d'entraînement, qui peut être mis, de manière contrôlée, en prise d'entraînement avec l'une ou l'autre de la première ou de la seconde courroies de transport.
